# EUROPÄISCHE PATENTANMELDUNG

(11) **EP 0 773 451 A1**
(43) Veröffentlichungstag der Anmeldung: **14.05.1997**
(21) Anmeldenummer: 96117635.1
(22) Anmeldetag: 04.11.1996
(51) Int. Cl.: G01S 13/02

(54) **Mit akustischen Oberflächenwellen arbeitendes Funkabfragesystem**

(30) Priorität: 07.11.1995 DE 19541475
(71) Anmelder: SIEMENS AKTIENGESELLSCHAFT, 80333 München (DE)
(72) Erfinder: Bulst, Wolf-Eckhard, 81739 München (DE); Reindl, Leonhard, 83071 Stephanskirchen (DE); Ruppel, Clemens, Dr., 85551 Kirchheim (DE); Seifert, Franz, Prof.Dr., 01170 Wien (AT)

(57) **Zusammenfassung**

Mit akustischen Oberflächenwellen arbeitendes Funkabfragesystem -OFW-Funkabfragesystem- mit einer Sende/Empfangseinheit (10, 11) und mindestens einen abzufragenden Parameter festlegenden Sensorelementen
1, 2, 3,..n) mit unterschiedlichen OFW-Laufzeiten und eine derartige Ausbildung eines Sensors der Sende/Empfangseinheit (10, 11) und der Sensorelemente (1, 2, 3,..,n), daß Abfragesignale und Antwortsignale zeitinvers zueinander sind.

## Beschreibung

Die vorliegende Erfindung betrifft ein mit akustischen Oberflächenwellen arbeitendes Funkabfragesystem -OFW-Funkabfragesystem- nach dem Oberbegriff des Patentanspruchs 1.

Funkabfragesysteme der gattungsgemäßen Art sind beispielsweise aus der DE-OS 42 17 049 bekannt. Ein derartiges bekanntes System enthält mindestens einen passiven OFW-Sensor zur Meßwertermittlung, wobei ein Meßwert von einem entfernten Meßort über Funk an ein Abfragegerät übermittelt wird, das dem Sensorelement als Abfrageimpuls über Funkenergie übermittelt. Der OFW-Sensor eignet sich zur berührungslosten Meßwerterfassung, wobei neben dem OFW-Sensorelement ein OFW-Referenzelement zur Phasendiskrimination und/oder Lauschzeitmessung vorgesehen ist. Der genannten Druckschrift ist weiterhin zu entnehmen, daß auch gechirpte Sende- und Antwortsignale verwendet werden können.

Sind in einem derartigen System mehrere Sensorelemente räumlich verteilt angeordnet, so muß der Empfänger in einer zentralen Sende/Empfangseinheit zwischen den Antwortsignalen der einzelnen Sensorelemente unterscheiden können. Dies kann in an sich bekannter Weise dadurch erreicht werden, daß jedem Sensorelement eine spezifische Codefolge zugeteilt wird, die vom Sender in der zentralen Sende/Empfangseinheit nacheinander ausgestrahlt werden, so daß als Antwortsignal des abgefragten Sensorelementes dessen Autokorrelationsspitze nach der OFW-Laufzeit an den Empfänger in der Sende/Empfangseinheit übertragen wird. Die Auswertung dieser Korrelationsspitze wird jedoch dadurch erschwert, daß gleichzeitig damit auch Kreuzkorrelationssignale aller anderen Sensorelemente als Hintergrundsignale auftreten. Da die räumliche Verteilung der Sensorelemente in der Praxis ungleich ist, kann das Kreuzkorrelationssignal eines der Sende/Empfangseinheit nahe benachbarten Sensorelementes stärker als das Autokorrelationssignal des angesprochenen entfernteren Sensorelementes sein und dessen Auswertung verhindern.

Der vorliegenden Erfindung liegt die Aufgabe zugrunde, ein OFW-Funkabfragesystem der in Rede stehenden Art anzugeben, bei dem Störungen der vorgenannten Art minimiert sind und zusätzlich eine nahezu gleichzeitige Auswertung aller Sensorelemente möglich ist.

Diese Aufgabe wird bei einem OFW-Funkabfragesystem der eingangs genannten Art erfindungsgemäß durch die Merkmale des kennzeichnenden Teils des Patentanspruchs 1 gelöst.

Weiterbildungen der Erfindung sind Gegenstand von Unteransprüchen.

Die Erfindung wird nachfolgend anhand von in den Figuren der Zeichnung dargestellten Ausführungsbeispielen näher erläutert. Es zeigt:
- Figur 1: ein generelles Blockschaltbild eines erfindungsgemäßen Funkabfragesystems; und
- Figur 2: Zeitdiagramme von im System nach Figur 1 auftretenden Abfrage- und Antwortsignalen.

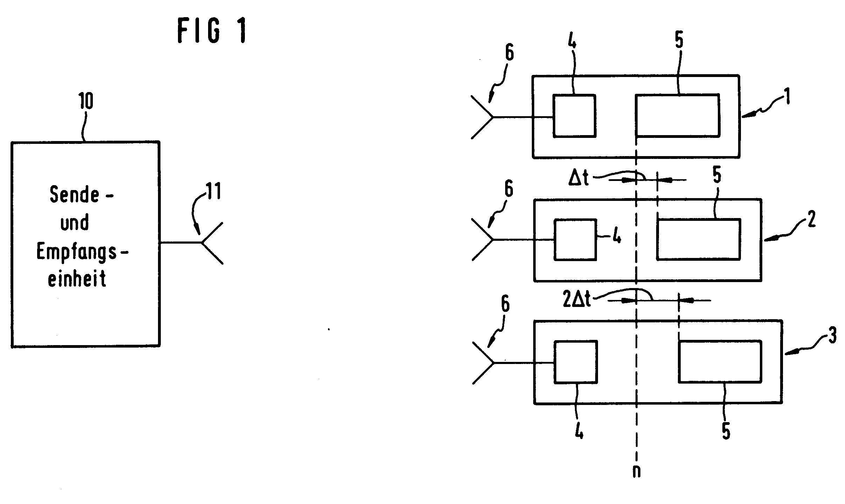

Das Funkabfragesystem nach Figur 1 besitzt eine Sende/Empfangseinheit 10, welche von einem in ihr enthaltenden Sender Abfragesignale über eine Antenne 11 zu Sensorelementen 1, 2, 3,...n aussendet und Antwortsignal von diesen Sensorelementen über die Antenne 11 empfängt und in einem Empfänger auswertet. Die Sende/Empfangseinheit 10 kann im wesentlichen in an sich bekannter Weise ausgebildet sein, wie dies beispielsweise in der eingangs genannten DE-OS 42 17 049 beschrieben ist. Dies gilt beispielsweise auch dann, wenn der Sender in der Sende/Empfangseinheit 10 beispielsweise gechirpte Abfragesignale aussendet.

Die Sensorelemente 1, 2, 3,...n empfangen die Abfragesignale von der Sende/Empfangseinheit 10 jeweils über eine Antenne 5, von der auch die Antwortsignale zur Sende/Empfangseinheit 10 abgestrahlt werden. Generell enthalten die Sensorelemente 1, 2, 3,..,n jeweils einen Wandler 3, welcher über die Antenne 5 empfangene elektrische Signale in eine akustische Oberflächenwelle umsetzt, die nach einer vorgegebenen Laufzeit einen Reflektor 4 erreicht und von diesem auf den Wandler rückreflektiert wird. Der Wandler 3 setzt diese rückreflektierte akustische Oberflächenwelle wiederum in ein elektrisches Signal um, da sie vorstehend bereits ausgeführt über die Antenne 5 abgestrahlt wird.

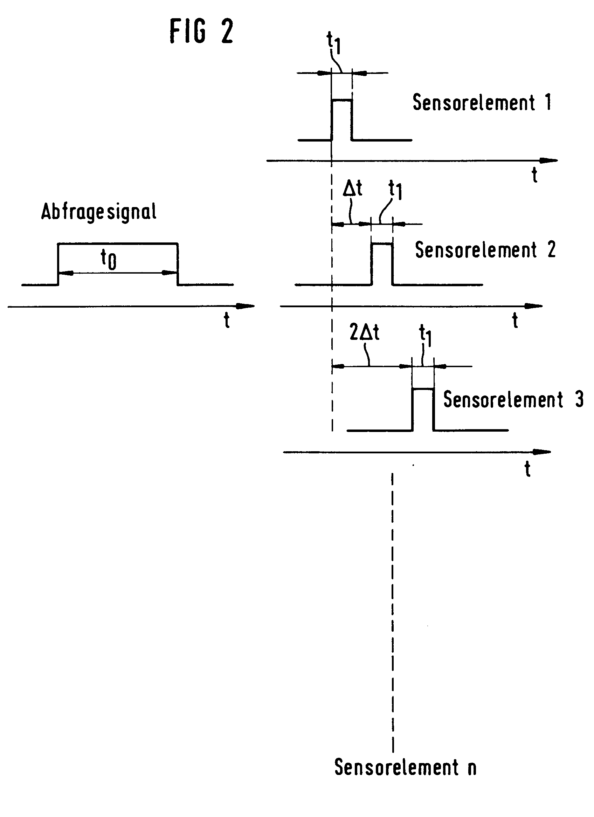

Die Sende/Empfangseinheit 10 sowie die Sensorelemente 1, 2, 3,...n sind erfindungsgemäß so ausgebildet, daß die Abfragesignale von einem in Figur 1 nicht eigens dargestellten Sensor und die Antwortsignale von den Sensorelementen zeitinvers zueinander sind und daß die Sensorelemente unterschiedliche OFW-Laufzeiten besitzen. Dieser Sachverhalt ist in den Zeitdiagrammen nach Figur 2 im einzelnen dargestellt. In diesen Diagrammen sind die genannten Signale als Funktion der Zeit t aufgetragen.

Die Sende/Empfangseinheit 10 sendet ein Abfragesignal mit der Zeitdauer t₀. Das Abfragesignal ist dabei insbesondere ein Spredspektrum-Signal, beispielsweise ein Chirp-Signal oder ein Impuls-Codemodulationssignal. Der in Figur 2 dargestellte Impuls mit der Impulsdauer t₀ stellt die Hüllkurve des Spredspektrum-Abfragesignals dar.

Die Sensorelemente 1, 2, 3,..,n setzen das Abfragesignal jeweils in ein Antwortimpulssignal mit der Zeitdauer t₁ um. Diese Impulsdauer t₁ ist groß gegen die Impulsdauer t₀ des Abfragesignals. Dies ergibt sich aus der zeitinversen Ausgestaltung des erfindungsgemäßen Funkabfragesystems. Die Impulskompression in den Sensorelementen 1, 2, 3,..,n kann beispielsweise durch deren Ausbildung als Matched Filter-Elemente realisiert werden.

Aufgrund der erfindungsgemäß vorgesehenen unterschiedlichen OFW-Laufzeiten in den Sensorelementen 1, 2, 3,..,n sind die impulsförmigen Antwortsignale zeitlich gegeneinander versetzt, so daß die Sensorelemente auch bei gleichzeitiger Abfrage noch unterschieden werden können. Sind die OFW-Laufzeitunterschiede gleich, so ergibt sich in Bezug auf das impulsförmige Antwortsignal vom Sensorelement 1 jeweils ein Zeitversatz von δt, 2δt...(n-1)δt. Aufgrund dieses Zeitversatzes können alle Sensorelemente mit der gleichen Codefunktion aufgebaut werden. Die Amplitude der impulsförmigen Antwortsignale bzw. der Autokorrelationsspitzen hängt vom Abstand zwischen der Sende/Empfangseinheit 10 und der einzelnen Sensorelemente 1, 2, 3,...n sowie von der Sensorgröße in Bezug auf das Abfragesignal ab.

Zur Kompensation verschieden großer Amplituden der Antwortsignale können für die Sende/Empfangseinheit mehrere räumlich unterschiedlich angeordnete Antennen 11 vorgesehen werden, die automatisch umgestaltet werden, so daß kleine Amplituden der Antwortsignale durch kürzere Übertragungsstrecken vergrößert werden können.

In Weiterbildung der Erfindung kann zur Erzeugung der Abfragesignale in der Sende/Empfangseinheit 10 eine Wavelet-Transformationsverarbeitung vorgesehen sein. Damit ist es möglich, äußere auf die Sensorelemente wirkende Einflüsse, wie beispielsweise Verformungen durch Temperatur oder mechanische Beanspruchung zu berücksichtigen. Eine Verformung der Sensorelemente bewirkt eine zeitliche Verschiebung der impulsförmigen Antwortsignale. Die Amplitude dieser Signale ist dann maximal, wenn das zeitinverse Abfragsignal sowohl hinsichtlich der Mittenfrequenz als auch hinsichtlich der Laufzeitdauer in dem jeweiligen Sensorelement mit dem durch äußere Einwirkung auf das Sensorelement veränderten seitlichen Verlauf des Abfragesignals übereinstimmt. Tritt eine gleiche bzw. homogene Verformung über der Gesamtlänge des jeweiligen Sensorelementes auf, so wird das Verhältnis der Signalperiode -Kehrwert der Mittenfrequenz- zur Laufzeit des jeweiligen Sensorelementes für alle Sensorelemente gleich, so daß die Antwortsignalform unverändert bleibt. Zur digitalen Synthetisierung des Abfragesignals für verschiedene Sensorgrößen, d.h. für verschiedene Zeitmaßstäbe wird die Sensorform einmal gespeichert und mit unterschiedlichen Taktfrequenzen ausgelesen.

Das Abfragesignal wird dabei gemäß einer besonderen Ausgestaltung der Erfindung schrittweise über den von allen Sensorelementen überstrichenen Bereich der Zeitskalierung bzw. Taktfrequenz verändert. Mit jedem Schritt entsteht eine andere Amplitudenverteilung der Amplitude der Antwortsignale bzw. Korrelationsspitzen. Daraus können mittels einer digitalen Vergleichsschaltung die Werte der Zeitskalierung abgeleitet werden, die den Verformungen aufgrund der äußeren Einflüsse (Temperaturverformung bzw. mechanische Verformung) entsprechen. Bei diesen Werten erreicht die Amplitude des jeweiligen Antwortsignals bzw. Korrelationsspitze ihr Maximum.

## Patentansprüche

1. Mit akustischen Oberflächenwellen arbeitendes Funkabfragesystem -OFW-Funkabfragesystem- mit einer Sende/Empfangseinheit (10, 11) und mindestens einen abzufragenden Parameter festlegenden Sensorelementen 1, 2, 3,..,n), bei dem ein Sender in der Sende/Empfangseinheit (10, 11) Abfragesignale zu den Sensorelementen (1, 2, 3,..,n) aussendet und von den Sensorelementen (1, 2, 3,..,n) rückgesendete Antwortsignale von einem Empfänger in der Sende/Empfangseinheit (10, 11) empfangen und ausgewertet werden,
**dadurch gekennzeichnet,** daß der Sender der Sende/Empfangseinheit (10, 11) und die Sensorelemente (1, 2, 3,..,n) so ausgebildet sind, daß die Abfragesignale und die Antwortsignale zeitinvers zueinander sind und daß die Sensorelemente (1, 2, 3,..,n) unterschiedliche OFW-Laufzeiten besitzen.

2. Funkabfragesystem nach Anspruch 1,
**dadurch gekennzeichnet,** daß die Abfragesignale Chirpsignale sind.

3. Funkabfragesystem nach Anspruch 1,
**dadurch gekennzeichnet,** daß die Abfragesignale impulscodierte Signale sind.

4. Funkabfragesystem nach einem der Ansprüche 1 bis 3,
**dadurch gekennzeichnet,** daß zur Erzeugung der Abfragesignale eine Wavelet-Transformationsverarbeitung vorgesehen ist.

5. Funkabfragesystem nach einem der Ansprüche 1 bis 4,
**dadurch gekennzeichnet,** daß zur Abfrage von räumlich unterschiedlich angeordneten Sensorelementen (1, 2, 3,..,n) in der Sende/Empfangseinheit (10, 11) mehrere räumlich unterschiedlich angeordnete umschaltbare Antennen vorgesehen sind.
